# FASCICULE DE BREVET EUROPEEN

(11) **EP 0 552 362 B1**
(45) Date de publication et mention de la délivrance du brevet: **05.03.1997**
(21) Numéro de dépôt: 92918540.3
(22) Date de dépôt: 14.08.1992
(51) Int. Cl.: B23B 49/02, B23Q 1/00, B23B 31/113

(54) **DISPOSITIF DE VERROUILLAGE D'UN OUTILLAGE SUR UN SUPPORT**
Kupplungsvorrichtung eines Werkzeuges auf einem Support
DEVICE FOR LOCKING A TOOL ON A SUPPORT

(30) Priorité: 14.08.1991 FR 9110326
(43) Date de publication de la demande: 28.07.1993
(73) Titulaire: ETABLISSEMENTS RECOULES ET FILS (S.A), 77330 Ozoir-La-Ferrière (FR)
(72) Inventeur: BURELLER, Michel, F-77831 Ozoir-la-Ferrière (FR)
(74) Mandataire: Viard, Jean
(86) Numéro de dépôt international: FR9200793
(87) Numéro de publication internationale: WO9303877

(56) Documents cités:
- DE-A- 2 947 938
- DE-A- 3 222 037
- FR-A- 879 749
- FR-A- 2 302 166
- US-A- 2 541 306
- US-A- 4 770 570

## Description

La présente invention a pour objet un dispositif de verrouillage et de fixation automatique d'un outillage sur un support destiné en particulier, mais non exclusivement, au montage d'une perceuse pneumatique sur une grille de perçage.

On sait que lorsqu'un grand nombre de perçages est nécessaire, avec un positionnement très précis de chacun d'eux, par exemple en aéronautique, il est connu de faire appel à une grille de perçage qui définit précisément la position des trous à réaliser.

A cet effet, il est connu de fixer l'outillage sur la grille pour que l'opération à effectuer puisse être réalisée sans déplacement relatif de l'outil par rapport à la pièce à percer. Cette fixation est jusqu'à ce jour en général manuelle en ce sens qu'elle nécessite une rotation de l'ensemble à verrouiller. La présente invention a pour objet un dispositif de fixation permettant d'assurer une fixation rigide de l'outillage de manière automatique, sans mouvement autre qu'une translation.

DE-A-2 947 938 décrit un dispositif de verrouillage destiné à la fermeture de moules comprenant une couronne pivotante, sous l'action d'une crémaillère, munie de rainures d'accrochage dans lesquelles peuvent venir s'insérer des doigts d'accrochage. Mais ce dispositif ne comprend pas de moyens de sécurité pneumatique.

FR-A-2 302 166 divulgue un gabarit de perçage sur lequel un groupe de perçage comprenant une plaque supportant la perceuse et un dispositif d'avance pouvant être constitué par un vérin pneumatique, c'est ce support qui amène, au moyen d'une charpente, la perceuse en regard de la pièce et celle-ci ne comprend pas de moyens d'accrochage direct sur le gabarit.

Selon la présente invention le dispositif de fixation amovible d'un outillage tel qu'une perceuse pneumatique à l'intérieur d'une douille fixée sur un support, comportant une couronne munie d'un secteur denté coopérant avec une crémaillère actionnée par un vérin est caractérisé en ce que la couronne est montée pivotante sur le canon de l'outillage et comporte au moins un doigt d'accrochage en saillie pénétrant dans une rainure de la douille, des sécurités étant prévues à l'extrémité avant du canon, consistant en des fuites obturées respectivement par contact de la partie avant du canon contre la douille, par serrage du doigt dans la rainure et radialement par la couronne.

Ainsi, l'outillage est présenté devant la douille de sorte que le ou les doigts d'accrochage puissent pénétrer dans la rainure correspondante de la douille puis tourner à l'intérieur de cette rainure de manière à réaliser un verrouillage à baïonnette.

Les sécurité sont constituées par des fuites d'air qui ne sont obturées que lorsque l'ensemble-couronne de l'appareil est en contact avec la douille, cette obturation provenant du contact de la partie avant du canon avec la surface de la douille, le doigt faisant serrage avec la douille sur le canon, et par obturation de la fuite radiale par la couronne.

Dans le cas d'une perceuse pneumatique, le pilotage de la perceuse est conçu de manière à ce que l'outil ne puisse pas être mis en rotation tant que les fuites ne sont pas colmatées par la douille. La pression pneumatique nécessaire au fonctionnement de l'outillage n'est obtenue qu'une fois que les fuites sont bouchées. Cela signifie que l'outillage ne peut effectivement fonctionner que lorsqu'il est convenablement positionné sur une douille.

Selon une caractéristique préférentielle de l'invention, la rainure de la douille comprend une partie axiale de pénétration des doigts et une partie hélicoïdale orientée dans la direction de la grille de perçage pour assurer le serrage de l'outillage sur la douille et par suite sur le support, la rotation de la couronne entraînant l'application ferme de l'outillage contre la douille et par suite contre la grille de perçage.

Selon encore une autre caractéristique préférentielle de l'invention, le canon de l'outillage comporte au moins deux pions destinés à pénétrer dans des orifices de la douille, l'un de ceux-ci empêchant la rotation de l'outillage en compensant le couple qui lui est appliqué, l'autre pion servant de détrompeur.

D'autres caractéristiques et avantages de l'invention apparaîtront au cours de la description que va suivre de modes particuliers de réalisation donnés à titre d'exemples non limitatifs en regard des figures qui représentent :
- La figure 1, une vue en coupe d'un outillage munie d'un attachement selon l'invention;
- la figure 2, une vue schématique de l'outillage au repos;
- la figure 3, une vue schématique de l'outillage lors de la présentation de l'unité de perçage sur la douille d'accrochage;
- la figure 4, une vue schématique du déverrouillage de l'unité de perçage sur la douille;
- la figure 5, une vue du vérin de commande de rotation de la couronne.

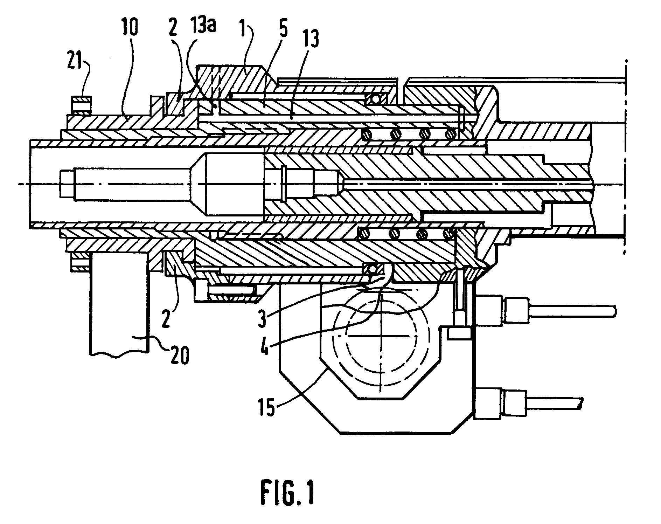

La figure 1, représente en coupe la partie avant d'un outillage accroché sur une grille de perçage 20 par l'intermédiaire d'une douille 10. La douille 10 est elle-même fixée sur la grille de perçage par tous moyens appropriés tel que notamment un écrou 21. L'outillage présente à sa partie avant un ensemble-couronne 1 monté pivotant autour du canon 5 de l'appareil, par exemple par des roulements à aiguilles et comportant à sa partie avant deux doigts d'accrochage 2 en saillie par rapport à la couronne 1. Les doigts d'accrochage 2 sont destinés à pénétrer dans une rainure puis à suivre une rampe hélicoïdale à l'intérieur de la douille 10 lors de la rotation de la couronne. On distingue à la partie supérieure de la Fig.1, deux canalisations de fuite respectivement axiale 13 et radiale 13a reliées à un étage de pilotage de la machine ou outillage (non représenté), par un piquage. Sur la Fig.1, la partie centrale du canon de la perceuse pneumatique pénètre à l'intérieur de la douille 10. On distingue également une broche porte-outil montée de manière traditionnelle.

Comme cela apparaît mieux sur les schémas suivants, la couronne 1 est entraînée en rotation par un piston-crémaillère 4 coopérant avec un secteur denté 3 solidaire de l'ensemble-couronne 1. Pratiquement, la rotation à effectuer est de l'ordre d'un huitième de tour dans un sens ou dans l'autre. La crémaillère est actionnée par un vérin 15 qui, dans le cas d'une perceuse pneumatique est, avantageusement, un vérin pneumatique.

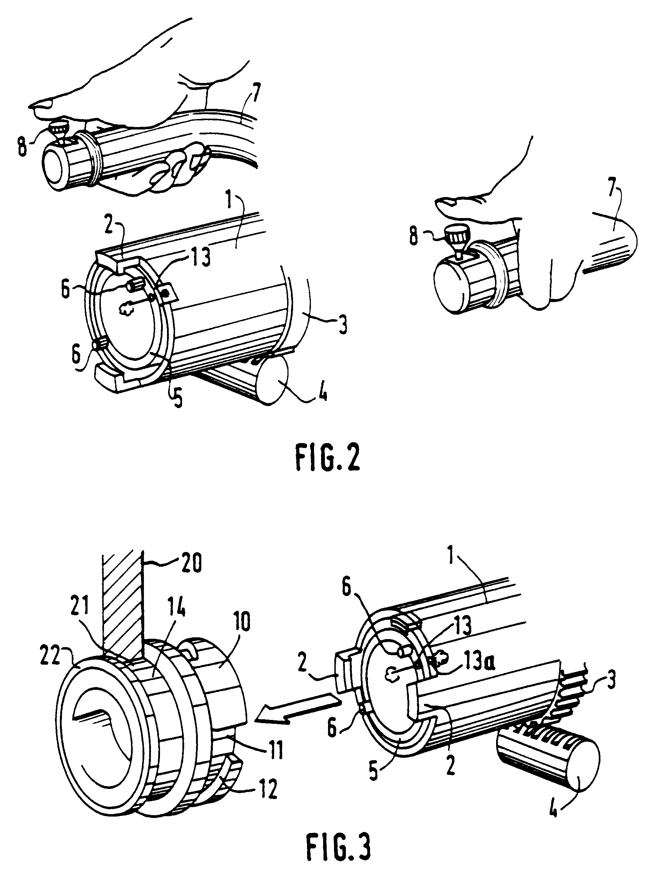

Sur la figure 2 on a schématisé la partie avant d'une perceuse au repos sous pression. A ce moment, les doigts d'ancrage sont, par exemple, verticaux et le piston-crémaillère 4 est tout entier reculé au dessous de l'ensemble-couronne 1. On distingue à la partie avant du canon 5, une fuite 13 axiale qui est reliée à un piquage sur l'étage de pilotage de la machine en aval de l'arrivée d'air sous pression (non représentée). Cette première fuite a pour but de contrôler l'application de la partie avant du canon contre une surface de la douille 10. Une seconde fuite 13a, radiale a pour but de contrôler le positionnement correct des doigts d'accrochage 2. On distingue également sur la figure 2, mais dans le canon 5 de l'appareil deux pions 6 qui ont pour objet d'une part d'éviter la rotation de la machine et d'autre part de jouer le rôle de détrompeur. Dans le mode de réalisation représenté, la machine comporte deux poignées 7 dont seules les extrémités apparaissent qui sont munies à leurs extrémités de boutons 8 de mise en action du dispositif de verrouillage. Ces boutons 8 commandent des distributeurs qui, de préférence, sont montés en série de sorte que l'appareil ne puisse être accroché que lorsqu'il est tenu à deux mains.

On retrouve les éléments mentionnés ci-dessus sur la figure 3 qui représente en outre la douille de verrouillage 10 qui est fixée dans la grille 20 par une gorge 21 et bloquée sur cette grille 20 par un écrou 22. Comme mentionné ci-dessus, la douille 10 comporte sur sa partie externe une fente à partie axiale 11 se poursuivant par une rampe hélicoïdale 12 qui a pour but d'appliquer étroitement le canon 5 de l'appareil contre la douille 10. Pour éviter que l'on n'utilise un appareil qui ne soit pas adapté à la douille prévue, deux pions 6 pénétrent nécessairement dans des orifices axiaux correspondants prévus dans la douille qui n'apparaissent pas sur la figure. L'un des pions est commun à tous les outillages, mais le second est angulairement décalé d'un outillage à l'autre afin d'éviter l'utilisation de douilles non adaptées aux perceuses et, vice-versa.

La couronne 1 tourne sur le canon 5 de l'appareil grâce par exemple à des roulements à aiguilles. Comme représenté sur la figure 3, lorsque les deux boutons 8 sont en position enfoncée, il se produit un déplacement vers l'extérieur de la crémaillère 4 sous l'influence d'un vérin qui sera décrit ci-après ce qui provoque la rotation d'un huitième de tour du secteur denté 3 dans le sens anti-horaire et par suite la rotation d'un même huitième de tour de la couronne 1 et des doigts d'accrochage 2. Ceux-ci peuvent alors entrer dans les rainures 11 ce qui entraîne l'ensemble de l'outillage vers la grille 20. Le relâchement des boutons 8 ramène la crémaillère vers l'intérieur de sorte que les doigts d'accrochage 2 glissent le long des rainures 12 pour reprendre la position verticale qui était la leur sur la figure 2, mais à l'intérieur des rainures 12 avec un serrage du canon contre la douille. Dans ces conditions, la douille 10 obture la fuite 13 et la couronne 1 la fuite 13a. La pression totale à l'intérieur de l'appareil remonte ce qui permet le déclenchement d'un cycle de perçage classique. On notera que l'automatisation de l'accrochage de l'appareil sur la grille permet le montage d'un tel appareil par un robot.

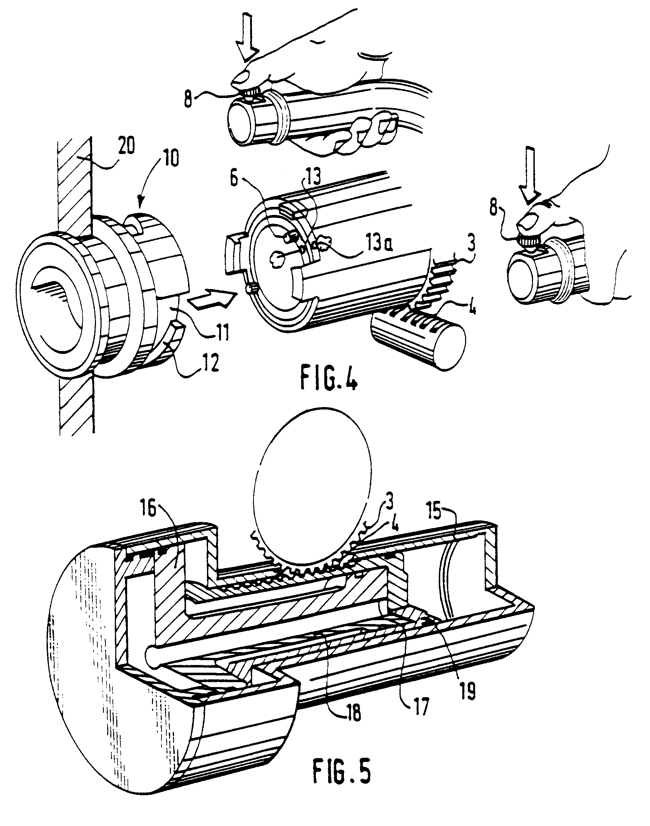

Comme représenté sur la figure 4, après perçage et réarmement du cycle de l'appareil, le déverrouillage se fait à nouveau par appui sur les deux boutons 8 ce qui fait tourner la couronne 1 dans le sens horaire et permet de dégager les doigts d'accrochage 2 des rainures 11 et 12. Le relâchement des boutons 8 permet de retrouver la position d'origine qui est celle représentée sur la figure 2. Pour le travail en série, les boutons 8 peuvent être maintenus enfoncés jusqu'à l'introduction dans une autre douille, mais dans ce cas, sans réarmer le cycle de perçage.

Comme cela apparaît sur la figure 5, la crémaillère 4 est intégrée dans le corps 15 d'un vérin à pistons différentiels. Lors du déverrouillage, étant donné qu'il peut se produire un collage, on fait appel au piston 16 qui est à forte section et par suite est plus puissant que le piston 17. L'action du piston de déblocage 16 est poursuivie par l'action du piston 17 lors de la rotation angulaire du secteur denté 3. Par contre pour le verrouillage, c'est le piston 17 qui est utilisé lors de la mise en position de verrouillage des deux doigts d'accrochage.

La présente invention permet ainsi de disposer d'un système de verrouillage automatique donnant une fixation rigide, sur une surface relativement grande, ce qui améliore la qualité du travail effectué par l'outillage.

## Revendications

1. Dispositif de fixation amovible d'un outillage tel qu'une perceuse pneumatique à l'intérieur d'un douille (10) fixée sur un support, comportant une couronne (1) munie d'un secteur denté (3) coopérant avec une crémaillère (4) actionnée par un vérin (15), caractérisé en ce que la couronne (1) est montée pivotante sur le canon (5) de l'outillage et comporte au moins un doigt d'accrochage (2) en saillie pénétrant dans une rainure (11, 12) de la douille (10), des sécurités étant prévues à l'extrémité avant du canon (5), consistant en des fuites (13, 13a) obturées respectivement par contact de la partie avant du canon (5) contre la douille (10) par serrage du doigt (2) dans la rainure (11, 12) et radialement par la couronne (1).

2. Dispositif selon la revendication 1, caractérisé en ce que le vérin (15) est un vérin pneumatique commandé par au moins un bouton (8) situé sur la poignée (7).

3. Dispositif selon la revendication 2, caractérisé en que deux boutons (8) sont montés en série chacun sur une poignée (7).

4. Dispositif selon la revendication 1, caractérisé en ce que la surface avant du canon (5) de l'outillage présente au moins un pion (6) pénétrant dans un orifice correspondant de la douille (10), d'immobilisation du canon (5) en rotation.

5. Dispositif selon la revendication 4, caractérisé en ce qu'un second pion (6) espacé angulairement du premier assure une sécurité de montage.

6. Dispositif selon la revendication 1, caractérisé en ce que le vérin (15) inclût un piston différentiel (16, 17), le piston (17) assurant le déverrouillage.

## Claims

1. A device for releasably fixing tooling such as a pneumatic drill in a socket (10) fixed on a support, the device including a ring (1) provided with a toothed sector (3) co-operating with a rack (4) actuated by an actuator (15), the device being characterized in that the ring (1) is pivotally mounted on the bush (5) of the tooling, and includes at least one projecting fastening finger (2) capable of penetrating in a groove (11, 12) of the socket (10), safety means being provided at the leading end of the bush (5) consisting of leaks (13, 13a) that are closed by clamping the finger (2) in the groove (11, 12), the leaks being closed radially by the ring (1), and axially by contact between the front portion of the bush (5) and the socket (10).

2. A device according to claim 1, characterized in that the actuator (15) is a pneumatic actuator controlled by at least one button (8) situated on a handle (7).

3. A device according to claim 2, characterized in that two buttons (8) are connected in series, each on a respective handle (7).

4. A device according to claim 1, characterized in that the front surface of the bush (5) of the tooling has at least one peg (6) that penetrates in a corresponding orifice of the socket (10), thereby preventing the bush (5) from rotating.

5. A device according to claim 4, characterized in that a second peg (6) angularly offset from the first peg provides assembly security.

6. A device according to claim 1, characterized in that the actuator (15) includes a differential piston (16, 17), the piston (17) providing unlocking.

## Patentansprüche

1. Vorrichtung zur abnehmbaren Befestigung eines Werkzeuges, wie einer pneumatischen Bohrmaschine im Inneren einer an einer Halterung angebrachten Hülse (10), bestehend aus einem Aufsteckkopf (1), der mit einem verzahnten Abschnitt (3) versehen ist, der mit einer Zahnstange (4) zusammenwirkt, die von einem Stellzylinder (15) betätigt wird, dadurch gekennzeichnet, daß der Aufsteckkopf (1) schwenkbar an dem Lauf (5) des Werkzeuges angebracht ist und mindestens einen abstehenden Verankerungshaken (2) aufweist, der in eine Nut (11, 12) der Hülse eingreift, wobei am vorderen Ende des Laufes (5) Sicherheitsvorkehrungen vorgesehen sind, die aus Leckleitungen (13, 13a) bestehen, die jeweils durch den Kontakt des vorderen Teiles des Laufes an der Hülse (10) bei der Verriegelung des Hakens (2) in der Nut (11, 12) und radial durch den Aufsteckkopf (1) verschlossen werden.

2. Vorrichtung nach Anspruch 1, dadurch gekennzeichnet, daß der Stellzylinder (15) ein pneumatischer Zylinder ist, der durch mindestens einen Knopf (8) steuerbar ist, der auf einem Handgriff (7) angeordnet ist.

3. Vorrichtung nach Anspruch 2, dadurch gekennzeichnet, daß zwei Knöpfe (8), die jeweils auf einem Handgriff (7) sitzen, in Reihe geschaltet sind.

4. Vorrichtung nach Anspruch 1, dadurch gekennzeichnet, daß die Vorderfläche des Laufes (5) des Werkzeuges mindestens einen abstehenden Zapfen (6) aufweist, der in eine korrespondierende Öffnung der Hülse (10) eingreift und die Drehung des Laufes (5) verhindert.

5. Vorrichtung nach Anspruch 4, dadurch gekennzeichnet, daß ein zweiter Zapfen (6) in einem Winkelabstand zum ersten vorgesehen ist, der die Montagesicherheit gewährleistet.

6. Vorrichtung nach Anspruch 1, dadurch gekennzeichnet, daß der Stellzylinder (15) einen Differentialkolben (16, 17) enthält und dieser Kolben (17) die Entriegelung gewährleistet.
